# EUROPÄISCHE PATENTSCHRIFT

(11) **EP 3 746 259 B1**
(45) Veröffentlichungstag und Bekanntmachung des Hinweises auf die Patenterteilung: **21.06.2023**
(21) Anmeldenummer: 19703054.7
(22) Anmeldetag: 31.01.2019
(51) Int. Cl.: B23K 26/14

(54) **GASZUFUHRVORRICHTUNG SOWIE LASERBEARBEITUNGSKOPF MIT DERSELBEN**
GAS SUPPLY DEVICE AND LASER PROCESSING HEAD COMPRISING SAME
DISPOSITIF D'AMENÉE DE GAZ ET TÊTE D'USINAGE LASER MUNIE DUDIT DISPOSITIF

(30) Priorität: 02.02.2018 DE 102018102348
(43) Veröffentlichungstag der Anmeldung: 09.12.2020
(73) Patentinhaber: Precitec GmbH & Co. KG, 76571 Gaggenau-Bad Rotenfels (DE)
(72) Erfinder: OPITZ, Florian, 77654 Offenburg (DE); LOOSE, Christian, 76571 Gaggenau (DE); SCHÜRMANN, Bert, 76593 Gernsbach (DE)
(74) Vertreter: Ter Meer Steinmeister & Partner
(86) Internationale Anmeldenummer: PCT/EP2019/052392
(87) Internationale Veröffentlichungsnummer: WO 2019/149825

(56) Entgegenhaltungen:
- EP-A2- 0 695 600
- EP-A2- 1 016 493
- CN-A- 105 436 720
- DE-A1- 3 637 568
- GB-A- 2 163 692
- JP-A- 2000 225 488
- JP-A- 2004 148 360
- JP-A- 2017 170 477
- US-A- 4 467 171

## Beschreibung

Die vorliegende Offenbarung betrifft eine Gaszufuhrvorrichtung und ein Laserbearbeitungskopf mit derselben, wie beispielsweise einen Laserbearbeitungskopf zum Laserschneiden, sowie ein Verfahren zur Laserbearbeitung, insbesondere ein Verfahren zum Laserschneiden. Die vorliegende Offenbarung betrifft insbesondere eine Gasführung zum Laserschneiden eines Werkstücks.

### Stand der Technik

In einer Vorrichtung zur Materialbearbeitung mittels Laser, z.B. in einem Laserbearbeitungskopf etwa zum Laserschweißen oder Laserschneiden, wird der von einer Laserlichtquelle oder einem Ende einer Laserleitfaser austretende Laserstrahl mit Hilfe einer Strahlführungs- und Fokussierungsoptik auf das zu bearbeitende Werkstück fokussiert oder gebündelt. Standardmäßig wird ein Laserbearbeitungskopf mit einer Kollimatoroptik und einer Fokussierungsoptik verwendet, wobei das Laserlicht über eine Lichtleitfaserzugeführt wird.

Beim Schneiden metallischer Materialien mittels Laserstrahlung tritt üblicherweise gemeinsam mit dem Laserstrahl eine Gasströmung aus dem Bearbeitungskopf aus. Zu diesem Zweck ist am Bearbeitungskopf eine Schneiddüse angebracht, durch die Laserstrahlung und Schneidgas auf ein zu bearbeitendes Werkstück gerichtet werden. Im Schneidprozess erfüllt das Schneidgas verschiedene Aufgaben. Zum einen unterstützt es durch die Übertragung von Druck- und Scherkräften an der Schnittfront und an den Schnittflanken den Austrieb des aufgeschmolzenen Materials aus der Schnittfuge. Diese Funktion des Schneidgases dominiert beim Schneiden von Edelstahl, weshalb in diesem Anwendungsfall ein inertes Medium (üblicherweise Stickstoff N₂) verwendet wird. Beim Schneiden von Baustahl hingegen wird ein reaktives Gas verwendet (üblicherweise Sauerstoff O₂). Das Schneidgas unterstützt in diesem Anwendungsfall den Trennvorgang, indem es die Umsetzung von Eisen zu Eisenoxid ermöglicht. Auf diese Weise wird neben der Laserstrahlung zusätzlich Reaktionswärme in den Prozess eingebracht. Daneben bleibt auch beim Baustahlschnitt die Funktion des Schmelzaustriebs erhalten. Als dritte Aufgabe verhindert das Schneidgas eine Verschmutzung des letzten optischen Elementes im Bearbeitungskopf, indem Prozessemissionen durch Impulsübertrag abgelenkt werden.

Für die oben genannten Funktionen des Schneidgases - vor allem der Schmelzaustrieb und die Oxidationsreaktion - ist es von Vorteil, wenn Strömungsgrößen beim Austritt aus der Schneiddüse möglichst homogen und symmetrisch über den Strömungsquerschnitt verteilt sind. Die Gleichverteilung der Strömungsgrößen gewinnt mit der Bearbeitung zunehmender Blechstärken (s > 10 mm) und dem Einsatz zunehmender Laserleistungen (P > 4 kW) an Bedeutung für das Prozessergebnis. Eine möglichst gleichmäßige Verteilung der Strömungsgrößen verbessert die Oberflächenqualität und Rechtwinkligkeit der resultierenden Schnittkanten und ermöglicht höhere Schnittgeschwindigkeiten.

Die US 4 467 171 A beschreibt eine Laserschneiddüse für eine Laserschneidvorrichtung, die einen fokussierten Strahl auf einen Punkt auf einem Werkstück richtet. Die Düse hat einen zylindrischen Körper mit einer konischen Spitze, die einen konisch geformten hohlen Innenraum aufweist. Eine Vielzahl von Gaseinlasslöchern erstreckt sich durch den Körper zu dem hohlen Innenraum, so dass eine Gas-Wirbelströmung koaxial durch die Düse zu erzeugt und durch eine Öffnung an der konischen Spitze auf das Werkstück gerichtet wird. Die EP 0 695 600 A2 beschreibt einen Laserbearbeitungskopf, der einen Gasverteiler zum Einführen von Gas neben einer innerhalb des Gehäuses gehaltenen Fokussierlinse umfasst. Der Gasverteiler besteht aus einer Vielzahl von gewinkelten Verteilungsschlitzen, die eine Gas-Wirbelströmung erzeugen, die von der Fläche der Linse weg und in Richtung des Düsenauslasses gerichtet ist. Des Weiteren ist aus Dokument JP 2017 170477 A eine gattungsgemässe Gaszufuhrvorrichtung bekannt.

### Offenbarung der Erfindung

Es ist eine Aufgabe der vorliegenden Offenbarung, eine Gaszufuhrvorrichtung für einen Bearbeitungskopf sowie einen Bearbeitungskopf mit derselben, insbesondere einen Laserbearbeitungskopf zum Laserschneiden, und ein Verfahren zur Laserbearbeitung bzw. zum Laserschneiden bereitzustellen, wobei eine verbesserte Oberflächenqualität und Rechtwinkligkeit der Schnittkanten und höhere Schnittgeschwindigkeit erzielt wird.

Diese Aufgabe wird durch den Gegenstand der unabhängigen Ansprüche gelöst. Vorteilhafte Ausgestaltungen der Erfindung sind in den Unteransprüchen angegeben.

Gemäß Ausführungsformen der vorliegenden Offenbarung umfasst eine Gaszufuhrvorrichtung für einen Laserbearbeitungskopf zum Erzeugen eines homogenen Gasstroms einen Gaseinlass, wenigstens eine Staukammer, die mit dem Gaseinlass verbunden ist und ein Stauvolumen bereitstellt, wenigstens ein Drosselelement, das eine Vielzahl von Durchlässen aufweist, und ein gemeinsames Volumen zum Überlagern eines Laserstrahls und eines Gasstroms, insbesondere des aus der Staukammer durch das Drosselelement zugeführten Gasstroms. Das Drosselelement verbindet die Staukammer mit dem gemeinsamen Volumen, um Gas aus der Staukammer in das gemeinsame Volumen zuzuführen. Das Drosselelement und die Staukammer sind dazu eingerichtet einen homogenen Gasstrom im gemeinsamen Volumen zu erzeugen, wobei die Durchlässe ein Verhältnis von Durchlasslänge zu Durchlassdurchmesser zwischen 2 und 8aufweisen, und wobei die Grenzwerte eingeschlossen sind. Dadurch kann ein Gasstrom mit homogener und über einen Strömungsquerschnitt symmetrischer Verteilung von wichtigen Strömungsgrößen bereitgestellt werden, wodurch Funktionen des Gases, wie etwa Schmelzaustrieb und Oxidation beim Laserschneiden, verbessert werden.

Die Gaszufuhrvorrichtung kann so ausgelegt sein, dass eine optische Achse des Laserbearbeitungskopfes und eine Achse des Gasstromes im gemeinsamen Volumen koaxial überlagert sind.

Die Gaszufuhrvorrichtung kann ferner eine Auslassöffnung an einem ersten Ende des gemeinsamen Volumens zum Bereitstellen des homogenen Gasstroms umfassen. Außerdem kann die Gaszufuhrvorrichtung Befestigungsmittel an einem zweiten Ende des gemeinsamen Volumens, das der Auslassöffnung gegenüberliegt, umfassen, um die Gaszufuhrvorrichtung an einem Laserbearbeitungskopf zu befestigen. Die Befestigungsmittel können insbesondere so gestaltet sein, dass bei Befestigen der Gaszufuhrvorrichtung an einem Bearbeitungskopf ein Laserstrahl und der Gasstrom koaxial aus der Auslassöffnung austreten, um auf ein Werkstück zu treffen. Die Gaszufuhrvorrichtung kann auch im Laserbearbeitungskopf integriert bzw. ein Teil desselben sein. Wenn der Laserbearbeitungskopf aus mehreren Modulen bzw. Teilen besteht, können Verbindungselemente zwischen diesen Modulen bzw. Teilen vorgesehen sein, wie beispielsweise Dichtungen, o.ä..

Das Drosselelement kann so angeordnet sein, dass ein durch die Durchlässe strömender Gasstrom zum zweiten Ende des gemeinsamen Volumens hin gerichtet ist. Wenn die Gaszufuhrvorrichtung an einem Laserbearbeitungskopf befestigt ist, kann das zweite Ende des gemeinsamen Volumens an ein optisches Element des Laserbearbeitungskopfes, z.B. eine Fokussierlinse oder -optik oder ein Schutzglas, angrenzen.

Die Gaszufuhrvorrichtung kann eine Mittelachse aufweisen, die mit einer optischen Achse eines Laserbearbeitungskopfes zusammenfällt und/oder die das erste Ende und das zweite Ende des gemeinsamen Volumens verbindet. Das Drosselelement kann so eingerichtet sein, dass der Gasstrom einen Winkel von 0° bis 30° zur Mittelachse aufweist: 0°≤α≤30°.

Die Durchlässe des Drosselelements können einen kreisförmigen oder länglichen Querschnitt aufweisen. Die Durchlässe können sich entlang der Strömungsrichtung, d.h. von der Staukammer zum gemeinsamen Volumen hin, verjüngen und/oder eine konische Form aufweisen. Das Drosselelement kann einen Lochkreis umfassen oder ein Lochkreis sein.

Die Staukammer kann ringförmig ausgebildet sein. Die Staukammer kann das gemeinsame Volumen umgeben bzw. um das gemeinsame Volumen umlaufend ausgebildet sein.

Der Gaseinlass kann der einzige Gaseinlass zur Staukammer sein.

Die Staukammer und das Drosselelement können eingerichtet sein, um eine im Wesentlichen gleichmäßige Verteilung einer oder mehrerer Strömungsgrößen des im gemeinsamen Volumen strömenden Gases und/oder des aus dem gemeinsamen Volumen ausströmenden Gases bereitzustellen. Die eine oder die mehreren Strömungsgrößen können aus der Gruppe ausgewählt sein, die eine Strömungsgeschwindigkeit, eine Strömungsrichtung, einen statischen Druck und eine Gasdichte o.ä. umfasst.

Ferner ist ein Laserbearbeitungskopf angegeben, der eine Laservorrichtung zum Bereitstellen eines Laserstrahls und eine Gaszufuhrvorrichtung zum Erzeugen eines homogenen Gasstroms nach einem der vorausgehenden Ausführungsbeispiele umfasst.

Der Laserbearbeitungskopf kann weiter ein optisches Element umfassen, wie beispielsweise eine Fokussieroptik oder ein Schutzglas. Das gemeinsame Volumen kann direkt im Anschluss an das optische Element angeordnet sein bzw. daran angrenzen. Das Drosselelement kann so eingerichtet sein, dass der durch die Durchlässe strömende Gasstrahl im Wesentlichen senkrecht oder in einem Winkel zwischen 60° und 90° auf das optische Element bzw. auf eine Oberfläche des optischen Elements gerichtet ist. Anders gesagt, kann das Drosselelement so eingerichtet sein, dass der durch die Durchlässe strömende Gasstrahl zu einer optischen Achse des Laserbearbeitungskopfes bzw. des optischen Elements in einem Winkel zwischen 0° und 30° auf das optische Element trifft.

Gemäß weiteren Ausführungsformen der vorliegenden Offenbarung ist ein Laserbearbeitungskopf zur Materialbearbeitung mittels eines Laserstrahls angegeben. Der Laserbearbeitungskopf umfasst eine Laservorrichtung zum Zuführen bzw. Bereitstellen eines Laserstrahls und eine Gaszufuhrvorrichtung zum Erzeugen eines Gasstroms. Die Gaszufuhrvorrichtung umfasst wenigstens eine Staukammer mit einem Gaseinlass, ein gemeinsames Volumen, in dem der Laserstrahl und der Gasstrom überlagert werden, und wenigstens ein Drosselelement, das die Staukammer mit dem gemeinsamen Volumen verbindet. Die wenigstens eine Staukammer und das wenigstens eine Drosselelement können eingerichtet sein, um einen im Wesentlichen homogenen Gasstrom bereitzustellen. Die Laservorrichtung kann beispielsweise eine Lichtleitfaser zum Zuführen eines Laserstrahls umfassen. Vorzugsweise umfasst das Laserbearbeitungssystem ein optisches Element, wie beispielsweise ein letztes optisches Element, wobei das gemeinsame Volumen direkt im Anschluss an dieses letzte optische Element angeordnet ist. Das optische Element kann eine Fokussieroptik oder ein Schutzglas beispielsweise für die Fokussieroptik sein. Vorzugsweise sind die wenigstens eine Staukammer und das wenigstens eine Drosselelement eingerichtet, um die im Wesentlichen gleich verteilte Gaszufuhr entlang eines gesamten Umfangs des optischen Elements bereitzustellen. Das heißt, das letzte optische Element wird an jeder Stelle seines Umfangs mit dem gleichen bzw. einem annähernd gleichen Volumenstrom angeströmt. Das optische Element kann so am zweiten Ende des gemeinsamen Volumens angeordnet sein, dass ein durch die Durchlässe des Drosselelements durchtretender Gasstrom in Richtung der Auslassöffnung am ersten Ende des gemeinsamen Volumens umgelenkt wird, und/oder um mehr als 90° und weniger als 180° umgelenkt wird. Typischerweise ist das wenigstens eine Drosselelement so angeordnet, dass der aus dem Drosselelement austretende Gasstrom zum optischen Element hin gerichtet ist. Beispielsweise ist der Gasstrom im Wesentlichen senkrecht oder mit einem Winkel von weniger als 45° auf das optische Element gerichtet. Vorzugsweise ist das Laserbearbeitungssystem eingerichtet, um den Laserstrahl und den Gasstrom im gemeinsamen Volumen im Wesentlichen koaxial zu überlagern. Vorzugsweise ist der Gaseinlass der einzige Gaseinlass zur wenigstens einen Staukammer. Vorzugsweise sind die wenigstens eine Staukammer und das wenigstens eine Drosselelement eingerichtet, um eine im Wesentlichen gleichmäßige Verteilung einer oder mehrerer Strömungsgrößen des in das gemeinsame Volumen einströmenden Gases und/oder des aus dem gemeinsamen Volumen ausströmenden Gases bereitzustellen. Beispielsweise kann die eine oder die mehreren Strömungsgrößen aus der Gruppe ausgewählt sein, die aus einer Strömungsgeschwindigkeit, einer Strömungsrichtung, und einer Strömungsdichte besteht. Vorzugsweise umfasst das wenigstens eine Drosselelement eine oder mehrere Öffnungen in einer Kammerwand der Staukammer. Beispielsweise kann das wenigstens eine Drosselelement einen Lochkreis umfassen oder ein Lochkreis sein. Vorzugsweise umfasst das Laserbearbeitungssystem eine Schneiddüse an einem Ende des gemeinsamen Volumens.

Gemäß weiteren Ausführungsformen der vorliegenden Offenbarung ist ein Verfahren zur Laserbearbeitung angegeben. Das Verfahren umfasst ein Stauen eines Gases in einem Stauvolumen, ein Drosseln und Zuführen des Gases aus dem Stauvolumen zu einem gemeinsamen Volumen, und ein Überlagern eines Laserstrahls mit dem zugeführten Gasstrom im gemeinsamen Volumen.

Gemäß der vorliegenden Offenbarung kann durch eine Hintereinanderschaltung eines Stauvolumens und eines Drosselelementes eine im Wesentlichen homogene und symmetrische Gaszufuhr zum gemeinsamen Volumen bereitgestellt werden. Die erfindungsgemäße Gaszufuhrvorrichtung kann insbesondere eine gleichmäßige Verteilung wichtiger Strömungsgrößen an der Auslassöffnung bereitstellen. Die beiden Elemente können in der Schneidgasführung eines Bearbeitungskopfes so angeordnet sein, dass sie die letzten beiden Elemente sind, die das Schneidgas vor dem Eintritt in das gemeinsame Volumen durchströmt. Durch die erfindungsgemäße Hintereinanderschaltung eines Stauvolumens und eines Drosselelementes kann eine verbesserte Oberflächenqualität und Rechtwinkligkeit der Schnittkanten sowie eine höhere Schnittgeschwindigkeit ermöglicht werden.

### Kurze Beschreibung der Zeichnungen

Ausführungsbeispiele der Offenbarung sind in den Figuren dargestellt und werden im Folgenden näher beschrieben. Es zeigen:
Figur 1A eine Schnittansicht einer Gaszufuhrvorrichtung an einem Laserbearbeitungskopf gemäß Ausführungsformen der vorliegenden Offenbarung,
Figur 1B eine Schnittansicht einer Gaszufuhrvorrichtung an einem Laserbearbeitungskopf gemäß weiteren Ausführungsformen der vorliegenden Offenbarung,
Figur 2A eine Schnittansicht einer in einem Laserbearbeitungskopf integrierten Gaszufuhrvorrichtung gemäß Ausführungsformen der vorliegenden Offenbarung,
Figur 2B eine perspektivische Ansicht des Laserbearbeitungskopfes mit der integrierten Gaszufuhrvorrichtung aus Figur 2A,
Figuren 3A und B Schnittansichten der Gaszufuhrvorrichtung der Figur 1,
Figur 4 eine Ausführungsform eines Drosselelements einer Gaszufuhrvorrichtung gemäß weiteren Ausführungsformen der vorliegenden Offenbarung,
Figur 5 eine Ausführungsform eines Drosselelements einer Gaszufuhrvorrichtung gemäß noch weiteren Ausführungsformen der vorliegenden Offenbarung,
Figuren 6A und B simulierte Volumenstromverteilungen durch Bohrungen einer Lochkreisdrossel bei zwei unterschiedlich großen Stauvolumina, und
Figuren 7A und B simulierte Geschwindigkeitsverteilungen über den Strömungsquerschnitt am Auslass einer Gaszufuhrvorrichtung bei unterschiedlicher Anzahl von Bohrungen des Drosselelements.

### Ausführungsformen der Offenbarung

Im Folgenden werden, sofern nicht anders vermerkt, für gleiche und gleichwirkende Elemente gleiche Bezugszeichen verwendet.

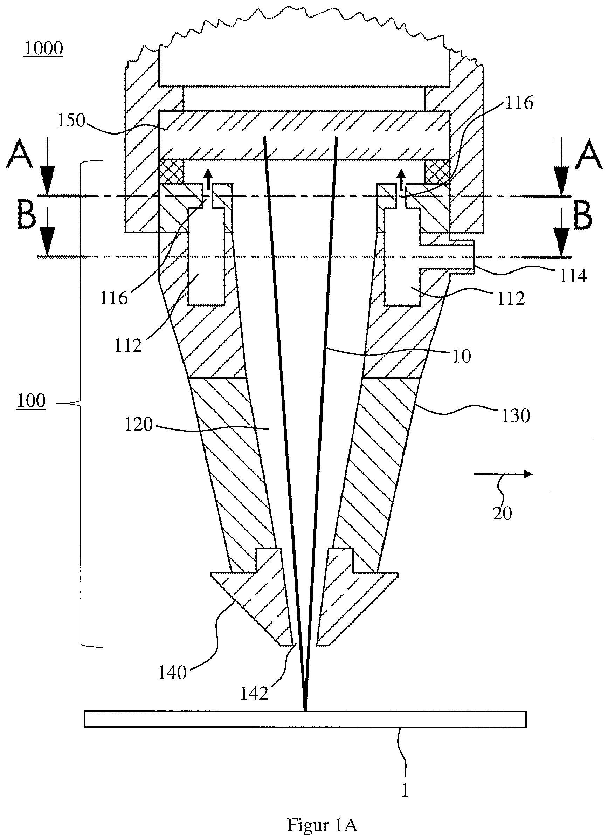

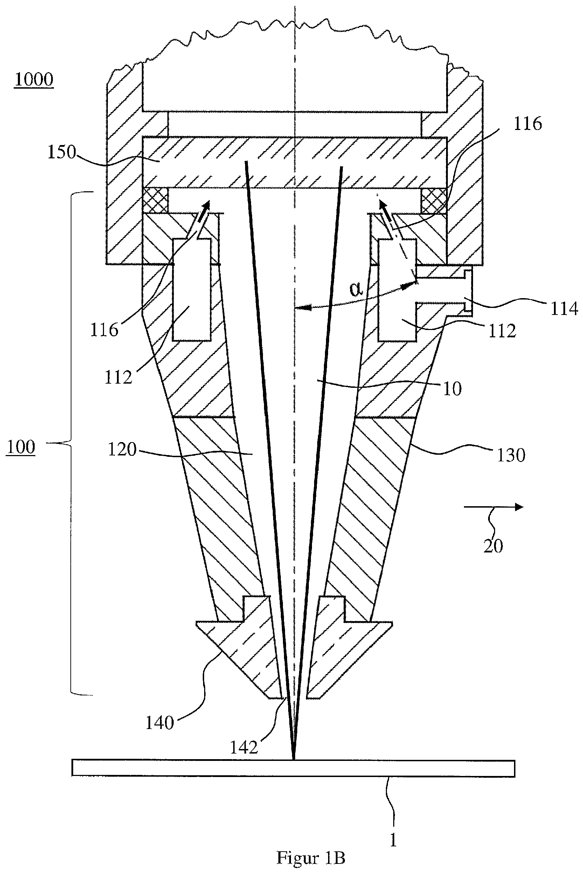

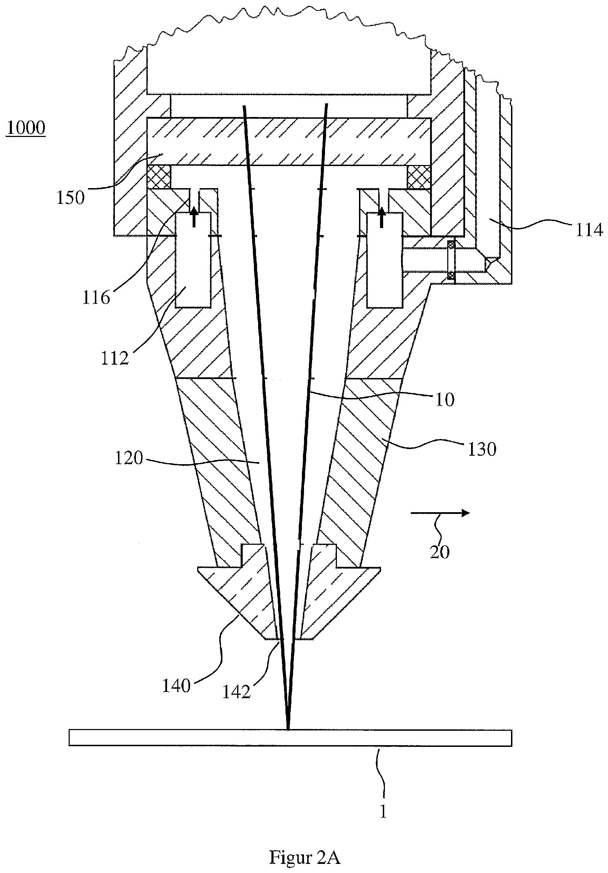

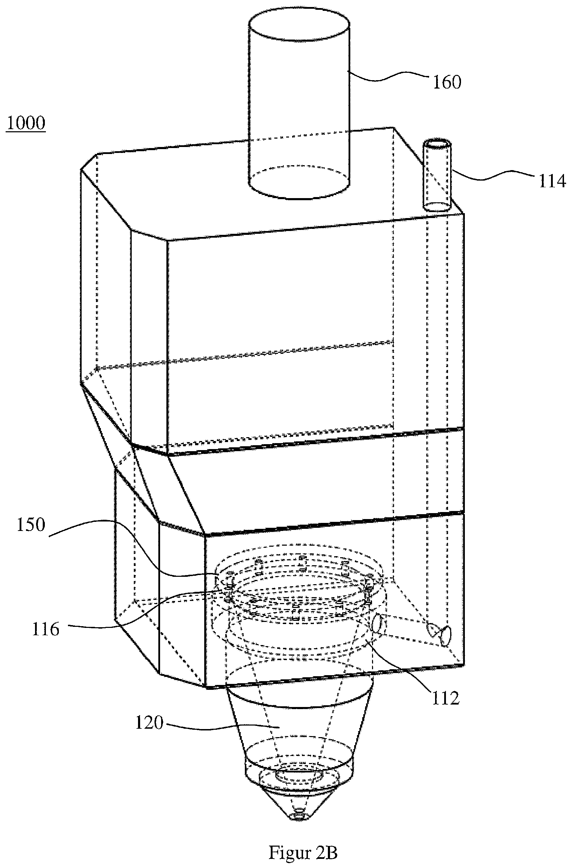

Figuren 1A und 1B zeigen eine Gaszufuhrvorrichtung 100 für einen Laserbearbeitungskopf gemäß Ausführungsformen der vorliegenden Offenbarung, die an einem Laserbearbeitungskopfes 1000 befestigt ist. Die Gaszufuhrvorrichtung 100 kann auch als ein unterer Teil oder eine Spitze des Laserbearbeitungskopfes betrachtet werden. Figuren 2A und 2B zeigen eine alternative Ausführungsform der Gaszufuhrvorrichtung 100, die in dem Laserbearbeitungskopf 1000 integriert ist. Der Laserbearbeitungskopf 1000 kann ein Bearbeitungskopf für Laserschneiden sein.

Die Gaszufuhrvorrichtung 100 für einen Laserbearbeitungskopf zum Erzeugen eines homogenen Gasstroms umfasst ein gemeinsames Volumen 120 zum Überlagern eines Laserstrahls 10 und eines Gasstroms, einen Gaseinlass 114, wenigstens eine Staukammer 112, die mit dem Gaseinlass 114 verbunden ist und ein Stauvolumen bereitstellt, und wenigstens ein Drosselelement 116, das eine Vielzahl von Durchlässen aufweist und die Staukammer 112 mit dem gemeinsamen Volumen 120 zum Zuführen des Gasstroms verbindet. Die wenigstens eine Staukammer 112 und das wenigstens eine Drosselelement 116 sind eingerichtet, um einen im Wesentlichen homogenen Gasstrom bereitzustellen. Die Gaszufuhrvorrichtung 100 umfasst eine Auslassöffnung 142 an einem ersten Ende des gemeinsamen Volumens 120. Die Auslassöffnung 142 kann den kleinsten Durchmesser der Gaszufuhrvorrichtung 10 bzw. der gesamten Gasführung darstellen, so dass an dieser Stelle die höchste Geschwindigkeit vorliegt und bei überkritischen Strömungsverhältnissen hier der Massenstrom festgelegt werden kann.

Die Gaszufuhrvorrichtung 100 kann dazu eingerichtet sein, an einem zweiten Ende des gemeinsamen Volumens 120 an einem Laserbearbeitungskopf 1000 befestigt zu werden. Das zweite Ende des gemeinsamen Volumens 120 kann dem ersten Ende gegenüberliegend angeordnet sein. Ferner kann die Gaszufuhrvorrichtung 100 dazu eingerichtet sein, dass ein vom Laserbearbeitungssystem 1000 zugeführter Laserstrahl 10 und ein durch den Gaseinlass 114 zugeführter Gasstrom im gemeinsamen Volumen 120 im Wesentlichen koaxial überlagert werden. Alternativ kann die Gaszufuhrvorrichtung 100, wie in Figuren 2A und 2B gezeigt, in den Laserbearbeitungskopf integriert sein.

Der im Wesentlichen homogene Gasstrom kann der im gemeinsamen Volumen 120 strömende Gasstrom und/oder der aus dem gemeinsamen Volumen 120 ausströmende Gasstrom sein. Insbesondere können die wenigstens eine Staukammer 112 und das wenigstens eine Drosselelement 116 so eingerichtet sein, dass ein optisches Element 150, das im Strahlengang des Laserbearbeitungskopfes als letztes vor Strahlaustritt aus dem Laserbearbeitungskopf angeordnet ist, gleichmäßig angeströmt wird und so ein im Wesentlichen homogener Gasstrom aus der Gaszufuhrvorrichtung 100 austritt. Das heißt, dass die Staukammer 112 und das Drosselelement 116 bzw. die Drosselelemente 116 dazu eingerichtet sind, einen Gasstrom mit einem gleichmäßig über einen Umfang des optischen Elements verteilten Volumenstrom zu erzeugen. Das optische Element 150 kann das optische Element, wie etwa eine Linse, im Laserbearbeitungskopf sein, das als letztes vor dem gemeinsamen Volumen 120 bzw. vor dem Austritt aus dem Laserbearbeitungskopf angeordnet ist. Durch diese gleichmäßige Anströmung des optischen Elements 150 ergibt sich eine homogene bzw. symmetrische Verteilung der Strömungsgrößen im gemeinsamen Volumen 120 und damit auch an der Auslassöffnung 142.

Das Problem, eine Gleichverteilung wichtiger Strömungsgrößen im gemeinsamen Volumen und/oder an der Auslassöffnung 142 der Gaszufuhrvorrichtung 100 zu erreichen, wird in der vorliegenden Erfindung durch die Hintereinanderschaltung einer Staukammer 112 und eines Drosselelementes 116 gelöst. Diese beiden Elemente können in der (Schneid-)Gasführung eines Bearbeitungskopfes so angeordnet werden, dass sie die letzten beiden Elemente sind, die das Gas vor dem Eintritt in das gemeinsame Volumen 120 durchströmt.

Das Stauvolumen der Staukammer 112 sorgt dafür, dass die Geschwindigkeit der Gasströmung nach dem Gaseinlass 114 reduziert wird. Aufgrund der Energieerhaltung erhöht sich gleichzeitig der statische Druck der Strömung. Je vollständiger die Strömung abgebremst wird, desto gleichmäßiger ist die Verteilung des statischen Drucks im Stauvolumen. Eine Gleichverteilung des statischen Drucks wiederum bewirkt, dass die Durchlässe des Drosselelements 116 gleichmäßig mit Schneidgas beaufschlagt werden und dieses somit gleichmäßig über den Umfang verteilt in das gemeinsame Volumen 120 einströmt. Die Richtungsabhängigkeit, die der Strömung durch den einseitigen Gaseinlass 114 aufgeprägt wird, kann somit vermindert bzw. vollständig aufgehoben werden.

Das Gas, das auch als "Schneidgas" bezeichnet werden kann, kann gemäß Ausführungsformen ein Inertgas, wie beispielsweise Stickstoff, oder ein reaktives Gas, wie beispielsweise Sauerstoff sein. Beim Schneiden von Edelstahl kann beispielsweise Stickstoff (N₂) verwendet werden. Beim Schneiden von Baustahl hingegen kann Sauerstoff (O₂) verwendet werden. Das Schneidgas unterstützt in diesem Anwendungsfall den Trennvorgang, indem es die Umsetzung von Eisen zu Eisenoxid ermöglicht. Auf diese Weise wird neben der Laserstrahlung zusätzlich Reaktionswärme in den Prozess eingebracht.

Die Gaszufuhrvorrichtung 100 kann gemäß Ausführungsformen ein Element 130 mit einem Hohlraum oder einer Kammer umfassen, wobei der Hohlraum oder die Kammer das gemeinsame Volumen 120 definiert. Das Element 130 und/oder das gemeinsame Volumen 120 können konisch zur Auslassöffnung 142 hin zulaufen. Das Element 130 kann auch ein Teil des Laserbearbeitungskopfes 1000 sein.

In einigen Ausführungsformen kann das wenigstens eine Drosselelement 116 einen oder mehrere Durchlässe, wie beispielsweise Löcher oder Bohrungen, umfassen, die die Staukammer 112 mit dem gemeinsamen Volumen 120 verbinden. Beispielsweise kann das wenigstens eine Drosselelement 116 einen Lochkreis umfassen oder ein Lochkreis sein. Die Durchlässe können kreisförmig, oval oder länglich ausgebildet sein.

Typischerweise kann die Gaszufuhrvorrichtung 100 eine Schneiddüse 140 am ersten Ende des gemeinsamen Volumens 120 umfassen. Beispielsweise kann die Schneiddüse 140 an einem ersten Ende des gemeinsamen Volumens 120 oder des Elements 130 angeordnet sein und die Auslassöffnung 142 umfassen. Durch die Auslassöffnung der Schneiddüse 140 können die Laserstrahlung und das (Schneid-)Gas vom gemeinsamen Volumen 120 kommend auf eine Bearbeitungsstelle eines Werkstücks 1 gerichtet werden.

Der Gaseinlass 114 kann der einzige Gaseinlass zur wenigstens einen Staukammer 112 sein. Anders gesagt kann in manchen Ausführungsformen das Gas nur über einen einzigen Gaseinlass zugeführt werden. Der Gaseinlass 114 kann seitlich am Bearbeitungskopf angeordnet sein. Das Schneidgas kann am Einlass entweder direkt durch einen Schlauch von extern oder durch weitere Bauteile des Bearbeitungskopfes von intern zugeführt werden. Bei einer internen Zuführung können im Bearbeitungskopf Bohrungen derart hintereinander angeordnet und abgedichtet werden, so dass ein Gaskanal gebildet wird, der von einem am Laserbearbeitungskopf angeordneten Gaseinlass 114 durch den Laserbearbeitungskopf hindurch führt und in die Staukammer 112 mündet.

Die Gleichverteilung des Gases im gemeinsamen Volumen 120 wird insbesondere dadurch erschwert, wenn die Zuleitung des Gases in das gemeinsame Volumen 120 durch einen einzelnen (internen oder externen) Einlass erfolgt. Hierdurch ergibt sich eine starke Richtungsabhängigkeit aller Strömungsgrößen im gemeinsamen Volumen 120 in Abhängigkeit von der Position des Einlasses. Die Verwendung eines einzelnen Einlasses ist aus Anwendungssicht aber wünschenswert, da dies den Anschluss und die Zuleitung des Schneidgases von einem Gasflaschenbündel zum Bearbeitungskopf erleichtert. Die erfindungsgemäße Kombination aus Staukammer und Drosselelement, die hintereinandergeschaltet sind, ermöglicht eine Gleichverteilung der Strömungsgrößen im gemeinsamen Volumen 120 trotz einseitigem Anschluss der Gaszuleitung.

Wie im Beispiel der Figuren 1A und 1B gezeigt ist, kann die Gaszufuhrvorrichtung in manchen Ausführungsformen, die mit anderen hier beschriebenen Ausführungsformen kombiniert werden können, an einem Laserbearbeitungskopf 1000 befestigt werden. Alternativ kann die Gaszufuhrvorrichtung auch als Teil desselben ausgebildet sein, wie in Figuren 2A und 2B gezeigt. Der Laserbearbeitungskopf 1000 umfasst ein optisches Element 150, das insbesondere das letzte optische Element im Strahlengang des Laserstrahls 10 sein kann. Typischerweise ist das optische Element 150 eine Fokussieroptik (z. B. eine Fokussierlinse oder eine Anordnung von mehreren Fokussierlinsen, die die optische Achse definieren können) oder ein Schutzglas, das die davor befindliche Fokussieroptik vor Verschmutzung durch Prozessemissionen schützt.

Die Gaszufuhrvorrichtung 100 kann so am Laserbearbeitungskopf befestigbar bzw. darin integriert sein, dass das optische Element 150 am zweiten Ende des gemeinsamen Volumens 120 bzw. des Elements 130, das der Auslassöffnung 142 gegenüberliegt, angeordnet ist. Insbesondere kann das gemeinsame Volumen 120 direkt im Anschluss an das optische Element 150 angeordnet sein. Anders gesagt befinden sich keine weiteren optischen Elemente zwischen dem optischen Element 150 und dem gemeinsamen Volumen 120. Wie im Beispiel der Figuren gezeigt ist, befindet sich das gemeinsame Volumen 120 zwischen dem optischen Element 150 und der Auslassöffnung 142. Das (Schneid-)Gas und der Laserstrahl 10 können demzufolge im Bearbeitungskopf 1000 unterhalb des letzten optischen Elementes 150 vereinigt (d.h. überlagert oder überlappt) werden. Vom letzten optischen Element 150 ausgehend werden die Laserstrahlung und Gasströmung im gemeinsamen Volumen 120 geführt, das zur Auslassöffnung 142 hin konvergent verlaufen kann.

Gemäß einigen Ausführungsformen, die mit anderen hier beschriebenen Ausführungsformen kombiniert werden können, sind die wenigstens eine Staukammer 112 und das wenigstens eine Drosselelement 116 eingerichtet, um eine im Wesentlichen gleichmäßige Verteilung einer oder mehrerer Strömungsgrößen des im gemeinsamen Volumen 120 strömenden Gases und/oder des aus dem gemeinsamen Volumen 120 ausströmenden Gases bereitzustellen. Die eine oder die mehreren Strömungsgrößen können aus der Gruppe ausgewählt sein, die eine Strömungsgeschwindigkeit, eine Strömungsrichtung, einen statischen Druck und eine Gasdichte umfasst.

Eine möglichst gleichmäßige Verteilung der Strömungsgrößen beispielsweise an der Auslassöffnung 142 setzt voraus, dass diese Strömungsgrößen bereits im gemeinsamen Volumen 120 von Schneidgas und Laserstrahl 10 möglichst gleichmäßig verteilt sind. Der konvergente Verlauf des Volumens kann einen homogenisierenden Einfluss auf die Gasströmung ausüben, jedoch reicht diese Beruhigungsstrecke - insbesondere bei kürzeren Fokusbrennweiten unter ungefähr f--200mm - nicht aus, um die Strömung voll auszubilden. Die erfindungsgemäße Kombination aus Staukammer und Drosselelement stellt eine im Wesentlichen gleichmäßige Verteilung der Strömungsgrößen an der Auslassöffnung 142 der Gaszufuhrvorrichtung 100 auch bei kurzen Fokusbrennweiten bereit.

Gemäß Ausführungsformen sind die wenigstens eine Staukammer 112 und das wenigstens eine Drosselelement 116 eingerichtet, um eine im Wesentlichen homogene oder gleichmäßige Gaszufuhr entlang eines gesamten Umfangs des optischen Elements 150 des Laserbearbeitungskopfes 1000 bereitzustellen. Der Umfang des optischen Elements ist typischerweise in einer Ebene senkrecht zur optischen Achse, die beispielsweise durch die Fokussieroptik bereitgestellt wird, definiert.

In manchen Ausführungsformen kann das wenigstens eine Drosselelement 116 so angeordnet sein, dass der Gasstrom zum zweiten Ende der Gaszufuhrvorrichtung 100, das am Laserbearbeitungskopf befestigbar ist, bzw. zum optischen Element 150 des Laserbearbeitungskopfes 1000, hin gerichtet ist. Im Beispiel der Figuren 1A und 2A ist der Gasstrom im Wesentlichen senkrecht auf das optische Element 150 gerichtet. Typischerweise ist das wenigstens eine Drosselelement 116 als Lochkreis ausgestaltet. Die Durchlässe oder Bohrungen des Drosselelements 116 können, wie in Figuren 1A und 2A dargestellt, vertikal gegen das letzte optische Element gerichtet sein. Alternativ können die Durchlässe des Drosselelements 116, wie in Figur 1B dargestellt, in einem Winkel gegenüber der Vertikalen und/oder der optischen Achse ausgerichtet sein. Gemäß Ausführungsformen kann der Winkel gegenüber der Vertikalen ein Winkel α zwischen 0° und 45° sein, und kann insbesondere ein Winkel zwischen 0° und 30° sein. Eine entsprechende Schrägstellung der Durchlässe ist in Figur 2 dargestellt, bei der der Gasstrom mit einem Winkel von weniger als 45° auf das optische Element 150 gerichtet werden kann. Selbstverständlich kann die in Figur 1B dargestellte Anordnung des Drosselelements und dessen Durchlässe auch auf eine im Laserbearbeitungskopf integrierte Gaszufuhrvorrichtung, wie sie in Figuren 2A und 2B gezeigt ist, angewendet werden.

In Figur 2A ist eine Gaszufuhrvorrichtung gezeigt, die als Teil des Laserbearbeitungskopfes 1000 ausgebildet ist. Figur 2B zeigt eine perspektivische Ansicht des Laserbearbeitungskopfes mit der integrierten Gaszufuhrvorrichtung. Der Laserbearbeitungskopf 1000 kann einen optischen Zugang bzw. eine Laservorrichtung 160 aufweisen, wie z.B. eine Faserbuchse oder eine Lichtleitfaser, durch die ein Laserstrahl in den Kopf eintreten und in das gemeinsame Volumen 120 geführt werden kann. Im gemeinsamen Volumen 120 kann der Laserstrahl und ein durch das Drosselelement 116 zugeführter Gasstrom koaxial überlagert werden. Hierbei kann der Gasstrom am optischen Element 150 in Richtung der Auslassöffnung 142 umgelenkt werden.

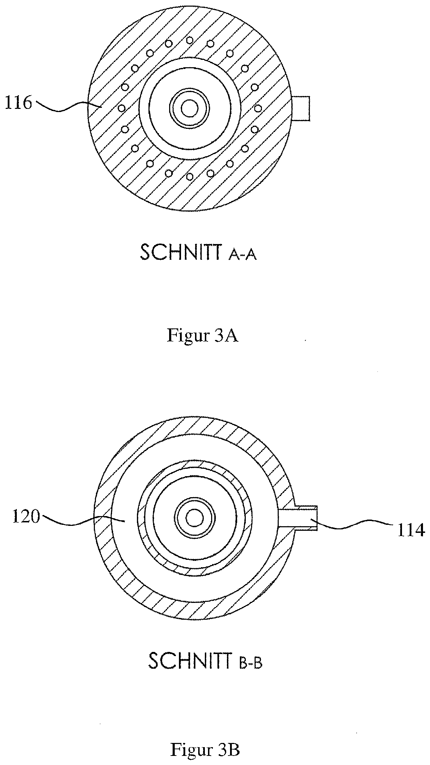

Figuren 3A und B zeigen Schnittansichten der Gaszufuhrvorrichtung der Figur 1A in den Ebenen A-A (Figur 3A) und B-B (Figur 3B).

Figur 3A zeigt einen Schnitt durch ein erfindungsgemäßes Drosselelement 116. In einigen Ausführungsformen kann das Drosselelement als Lochkreis ausgestaltet sein ("Lochkreisdrossel"), der aus dem vorgeschalteten Stauvolumen der Staukammer 112 heraus mit Schneidgas versorgt wird. Im Beispiel der Figur 3A ist das Drosselelement 116 als Lochkreis mit 20 Durchlässen bzw. Bohrungen ausgestaltet. Die Anzahl der Durchlässe ist jedoch beispielhaft und kann variieren. Ebenso kann die Verteilung der Durchlässe über den Umfang des Drosselelements 116 gleichmäßig oder unterschiedlich gestaltet sein.

Die Bohrungsanzahl bzw. Durchlassanzahl liegt vorzugsweise zwischen 5 und 40, vorzugsweise zwischen 10 und 30, und noch bevorzugter zwischen 15 und 25. Zusätzlich kann der Durchmesser der Durchlässe bzw. Bohrungen vorzugsweise zwischen 1,0 mm und 1,5 mm sein.

In Figur 3B ist ein Schnitt durch eine erfindungsgemäße Staukammer120 dargestellt. Auf der rechten Seite ist der Gaseinlass 114 dargestellt. Beispielsweise kann hier das Schneidgas mit Hilfe eines Fittings und eines Schlauches direkt von extern zugeführt werden. In anderen Ausführungsformen kann das Schneidgas auch innerhalb eines Laserbearbeitungskopfes über weitere Komponenten wie Bohrungen und/oder Rohre zugeführt werden. In diesem Fall kann sich das Fitting zur Schneidgasversorgung des Bearbeitungskopfes von extern an einer anderen Stelle am Bearbeitungskopf befinden.

Das Verhältnis des Stauvolumens zum Gesamtvolumen aller Bohrungen kann einen Einfluss auf die Stau- und Drosselfunktion der erfindungsgemäßen Anordnung haben. Beispielsweise kann ein Verhältnis des Volumens der Staukammer 112 (Stauvolumen) zum Gesamtvolumen aller Durchlässe V_{Staukammer}/V_{Drosselement} zwischen 1 und 500, vorzugsweise zwischen 10 und 200, und noch bevorzugter zwischen 30 und 160 sein. Insbesondere kann das Verhältnis V_{Staukammer}/V_{Drosselement}=30 bzw. V_{Staukammer}/V_{Drosselement}=160 sein. Die vorliegende Offenbarung ist jedoch nicht begrenzt, und jedes geeignete Verhältnis des Stauvolumens zum Gesamtvolumen aller Bohrungen, welches die Stau- und Drosselfunktion bereitstellt, kann verwendet werden.

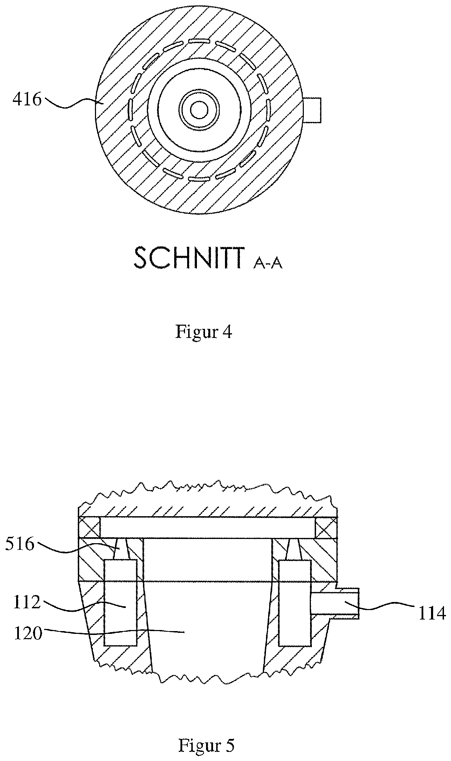

Figur 4 zeigt ein Drosselelement 416 gemäß weiteren Ausführungsformen der vorliegenden Offenbarung. Figur 4 entspricht einem Schnitt in der Ebene A-A der Figur 1A. Im Beispiel der Figur 4 ist das Drosselelement 416 aus einem Kreis mit Langlöchern gebildet. Die Langlöcher können eine Krümmung aufweisen, so dass die Langlöcher 416 dem Kreisumfangsverlauf folgen.

Figur 5 zeigt ein Drosselelement 516 gemäß noch weiteren Ausführungsformen der vorliegenden Offenbarung. Das Drosselelement 516 kann gemäß Ausführungsformen konische Bohrungen bzw. Durchlässe umfassen. Insbesondere kann eine Lochkreisdrossel mit konischen Bohrungen versehen sein. Die konischen Bohrungen 516 können sich in Strömungsrichtung, d.h. ausgehend vom Stauvolumen 120 hin zum gemeinsamen Volumen 120, verjüngen.

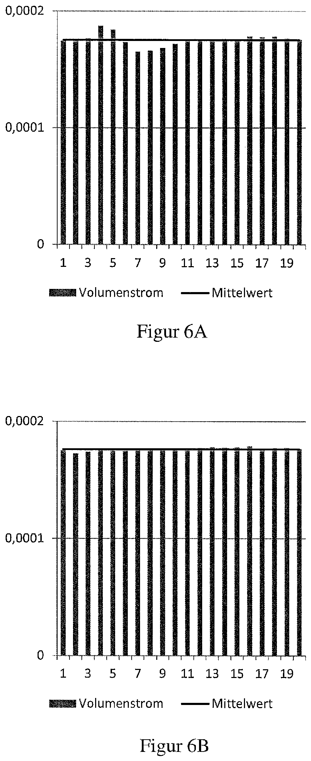

In den Figuren 6A und B zeigen simulierte Volumenstromverteilungen durch 20 Bohrungen eines als Lochkreisdrossel ausgebildeten Drosselelements bei zwei unterschiedlich großen Stauvolumina. Alle sonstigen Abmessungen der Gasführung sind in beiden Fällen gleich. Insbesondere ist die Höhe des Volumenstroms bei Vorschaltung eines kleinen Stauvolumens (Figur 6A) und eines großen Stauvolumens (Figur 6B) gezeigt, Einheit des Volumenstroms ist m³/s. Es ist zu erkennen, dass im Fall eines kleineren Stauvolumens die Beaufschlagung der Bohrungen ungleichmäßiger erfolgt als im Fall des größeren Stauvolumens.

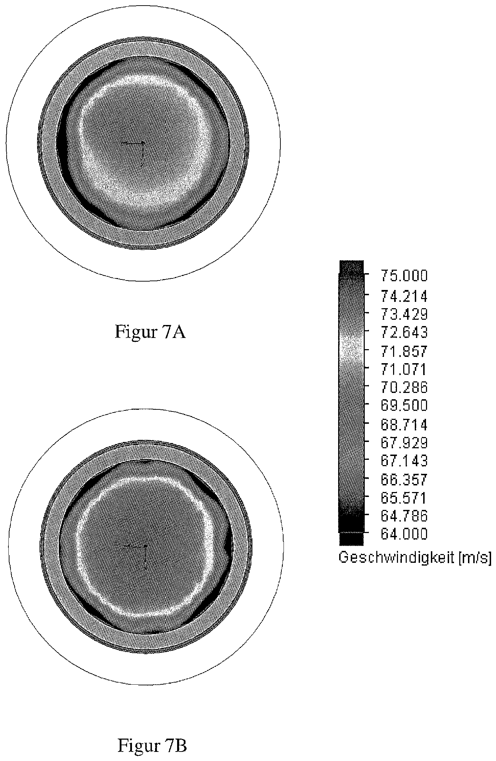

Somit führt eine ungeeignete Auslegung des Drosselelements und der Staukammer zu einer ungleichmäßigen Verteilung des Volumenstroms durch die Durchlässe des Drosselelements und damit zu einer ungleichmäßigen Verteilung wichtiger Strömungsgrößen im gemeinsamen Volumen und am Auslass der Gaszufuhrvorrichtung. Zur Veranschaulichung sind in den Figuren 7A und B zwei Geschwindigkeitsverteilungen über den Strömungsquerschnitt an der Auslassöffnung 142 der Gaszufuhrvorrichtung 100 dargestellt. Figur 7A zeigt eine Auslegungsvariante mit einer zu geringen Durchlassanzahl. Es ist deutlich zu erkennen, dass das Maximum der Geschwindigkeitsverteilung exzentrisch verschoben ist. Im Gegensatz dazu zeigt Figur 7B das Ergebnis einer Auslegungsvariante mit geeigneter Wahl der Durchlassanzahl. Die Geschwindigkeitswerte sind hier annähernd kreissymmetrisch um das Zentrum verteilt.

In herkömmlichen Gaszufuhrvorrichtungen für Laserbearbeitungsköpfe kann keine gleichmäßige Verteilung der Strömungsgrößen im gemeinsamen Volumen, in dem Laserstrahl 10 und Gasstrom überlagert werden, erreicht werden. Strömungssimulationen haben gezeigt, dass hierfür das letzte optische Element (z. B. Fokuslinse oder Schutzglas) des Laserbearbeitungskopfes über den gesamten Umfang gleichmäßig angeströmt werden muss. Zu diesein Zweck ist gemäß der vorliegenden Erfindung das letzte Element der Gasführung vor dem gemeinsamen Volumen 120 als Drosselelement 116 ausgebildet. Des Weiteren wird durch das in der Gasführung vorgeschaltete Stauvolumen der Staukammer 112 sichergestellt, dass alle vorhandenen Durchlässe dieses Drosselelements 116 gleichmäßig mit Gas beaufschlagt werden.

Ein Laserbearbeitungskopf 1000, beispielsweise zum Laserschneiden, gemäß Ausführungsformen der vorliegenden Offenbarung umfasst eine Laservorrichtung 160 zum Bereitstellen eines Laserstrahls 10, wie etwa eine Lichtleitfaser. Der Laserstrahl 10 kann auch als "Bearbeitungsstrahl" oder "Bearbeitungslaserstrahl" bezeichnet werden. Der Laserbearbeitungskopf 1000 ist eingerichtet, um den Laserstrahl 10 auf einen Bearbeitungsbereich des Werkstücks 1 zu lenken. Der Laserbearbeitungskopf 1000 kann eine Kollimatorlinse zur Kollimation des Laserstrahls 10 und eine Fokussieroptik, wie beispielsweise die Fokussierlinse oder Anordnung von Fokussierlinsen zum Fokussieren des Laserstrahls 10 auf das Werkstück 1 aufweisen.

Der Laserbearbeitungskopf 1000 umfasst ferner eine Gaszufuhrvorrichtung 100 zum Erzeugen eines homogenen Gasstroms gemäß den hierin beschriebenen Ausführungsformen. Gemäß Ausführungsformen ist die Gaszufuhrvorrichtung 100 so am Laserbearbeitungskopf 1000 befestigt, um den Laserstrahl 10 und den Gasstrom im gemeinsamen Volumen 120 im Wesentlichen koaxial zu überlagern oder zu überlappen. Beispielsweise kann die Gaszufuhrvorrichtung 100 eingerichtet sein, um den Gasstrom über das wenigstens eine Drosselelement 116 in einen Strahlengang des Laserbearbeitungskopfes einzukoppeln.

In manchen Ausführungsformen, die mit anderen hier beschriebenen Ausführungsformen kombiniert werden können, umfasst das Laserbearbeitungssystem 1000 ein optisches Element 150, das insbesondere das letzte optische Element im Strahlengang des Laserstrahls 10 sein kann. Typischerweise ist das optische Element 150 eine Fokussieroptik (z. B. eine Fokussierlinse oder eine Anordnung von mehreren Fokussierlinsen, die die optische Achse definieren können) oder ein Schutzglas beispielsweise der Fokussieroptik. Die Gaszufuhrvorrichtung 100 kann so am Laserbearbeitungskopf befestigt sein, dass das optische Element 150 am zweiten Ende des gemeinsamen Volumens 120 bzw. des Elements 130, das der Auslassöffnung 142 gegenüberliegt, angeordnet ist. Insbesondere kann das gemeinsame Volumen 120 direkt im Anschluss an das optische Element 150 angeordnet sein. Anders gesagt befinden sich keine weiteren optischen Elemente zwischen dem optischen Element 150 und dem gemeinsamen Volumen 120. Wie im Beispiel der Figuren gezeigt ist, befindet sich das gemeinsame Volumen 120 zwischen dem optischen Element 150 und der Auslassöffnung 142. In einigen Ausführungsformen kann der Gasstrom, beispielsweise am optischen Element 150, umgelenkt werden, so dass der Gasstrom auf eine optische Achse des Laserbearbeitungskopfes 1000 zuströmt und diese entlangströmt. Die Staukammer 112 und das Drosselelement 116 können in der Schneidgasführung des Bearbeitungskopfes so angeordnet sein, dass sie die letzten beiden Elemente sind, die das Schneidgas vor dem Eintritt in das gemeinsame Volumen 120 durchströmt.

Der Laserbearbeitungskopf 1000 kann gemäß Ausführungsformen entlang einer Bearbeitungsrichtung 20 bewegbar sein. Die Bearbeitungsrichtung 20 kann eine Schneidrichtung und/oder eine Bewegungsrichtung des Laserbearbeitungskopfes 1000 bezüglich des Werkstücks 1 sein. Insbesondere kann die Bearbeitungsrichtung 20 eine horizontale Richtung sein. Die Bearbeitungsrichtung 20 kann auch als "Schneidrichtung" oder "Vorschubrichtung" bezeichnet werden.

Ferner umfasst ein Verfahren zur Laserbearbeitung, welches in einem Laserbearbeitungssystem oder in einem Laserbearbeitungskopf 1000 verwenden kann, ein Stauen eines Gases in einem Stauvolumen, ein Drosseln und Zuführen des Gasstroms aus dem Stauvolumen in ein gemeinsames Volumen, und ein Überlagern eines Laserstrahls mit dem zugeführten Gasstrom im gemeinsamen Volumen. Die überlagerten Strahlen können beispielsweise durch die Auslassöffnung 142 aus dem gemeinsamen Volumen 120 der Gaszufuhrvorrichtung 100 austreten.

Gemäß der vorliegenden Offenbarung kann also durch eine Hintereinanderschaltung einer Staukammer und eines Drosselelementes eine im Wesentlichen homogene und symmetrische Gaszufuhr zur Überlagerung mit einem Laserstrahl bereitgestellt werden. Die erfindungsgemäße Gasführung kann insbesondere eine Homogenisierung wichtiger Strömungsgrößen am Austritt eines Laserbearbeitungskopfes bereitstellen. Hierdurch kann beispielsweise eine verbesserte Oberflächenqualität und Rechtwinkligkeit von Schnittkanten sowie eine höhere Schnittgeschwindigkeit beim Laserschneiden ermöglicht werden.

## Patentansprüche

1. Gaszufuhrvorrichtung (100) für einen Laserbearbeitungskopf zum Erzeugen eines homogenen Gasstroms, umfassend:
einen Gaseinlass (114);
wenigstens eine Staukammer (112), die mit dem Gaseinlass (114) verbunden ist und ein Stauvolumen bereitstellt;
wenigstens ein Drosselelement (116, 416, 516), das eine Vielzahl von Durchlässen aufweist,
ein gemeinsames Volumen (120) zum Überlagern eines Laserstrahls (10) und eines Gasstroms; und
eine Auslassöffnung (142) an einem ersten Ende des gemeinsamen Volumens (120) zum Bereitstellen des homogenen Gasstroms;
wobei das Drosselelement (116, 416, 516) die Staukammer (112) mit dem gemeinsamen Volumen (120) verbindet,
**gekennzeichnet dadurch, dass**
das Drosselelement (116, 416, 516) und die Staukammer (112) dazu eingerichtet sind, um einen homogenen Gasstrom im gemeinsamen Volumen (120) zu erzeugen, wobei
die Durchlässe ein Verhältnis von Durchlasslänge zu Durchlassdurchmesser zwischen 2 und 8 aufweisen, und wobei die Grenzwerte eingeschlossen sind.

2. Die Gaszufuhrvorrichtung (100) nach Anspruch 1, wobei die Gaszufuhrvorrichtung im Laserbearbeitungskopf integriert ist oder ein Teil desselben bildet, oder
wobei die Gaszufuhrvorrichtung (100) ferner mindestens ein Befestigungsmittel an einem zweiten Ende des gemeinsamen Volumens (120), das der Auslassöffnung (142) gegenüberliegt, zum Befestigen der Gaszufuhrvorrichtung (100) am Laserbearbeitungskopf umfasst.

3. Gaszufuhrvorrichtung (100) nach Anspruch 1 oder 2, wobei das Drosselelement (116, 416, 516) so angeordnet ist, dass ein durch die Durchlässe strömender Gasstrom auf ein zweites Ende des gemeinsamen Volumens (120), das dem ersten Ende gegenüberliegt, gerichtet ist.

4. Gaszufuhrvorrichtung (100) nach Anspruch 3, wobei die Gaszufuhrvorrichtung (100) eine Mittelachse aufweist, die das erste Ende und das zweite Ende des gemeinsamen Volumens (120) verbindet, und wobei das Drosselelement (116, 416, 516) so eingerichtet ist, dass der Gasstrom einen Winkel von 0° bis 30° zur Mittelachse aufweist: 0°≤α≤30°.

5. Gaszufuhrvorrichtung (100) nach einem der vorausgehenden Ansprüche, wobei die Durchlässe einen kreisförmigen oder länglichen Querschnitt aufweisen.

6. Gaszufuhrvorrichtung (100) nach einem der vorausgehenden Ansprüche, wobei die Durchlässe sich von der Staukammer (112) zum gemeinsamen Volumen (120) hin verjüngen und/oder eine konische Form aufweisen.

7. Gaszufuhrvorrichtung (100) nach einem der vorausgehenden Ansprüche, wobei das Drosselelement (116, 416, 516) einen Lochkreis umfasst oder ein Lochkreis ist.

8. Gaszufuhrvorrichtung (100) nach einem der vorausgehenden Ansprüche, wobei die Durchlässe einen Durchmesser zwischen 0,5 und 2 mm aufweisen, wobei die Grenzwerte eingeschlossen sind.

9. Gaszufuhrvorrichtung (100) nach einem der vorausgehenden Ansprüche, wobei die Staukammer (112) ringförmig ausgebildet ist und/oder um das gemeinsame Volumen (120) herumläuft.

10. Gaszufuhrvorrichtung (100) nach einem der vorausgehenden Ansprüche, wobei der Gaseinlass (114) der einzige Gaseinlass zur Staukammer (112) ist.

11. Gaszufuhrvorrichtung (100) nach einem der vorausgehenden Ansprüche, wobei eine Anzahl der Durchlässe des Drosselelements (116, 416, 516) zwischen 5 und 40 oder zwischen 10 und 30 oder zwischen 15 und 25 liegt, wobei die Grenzwerte eingeschlossen sind.

12. Gaszufuhrvorrichtung (100) nach einem der vorausgehenden Ansprüche, wobei ein Verhältnis des Volumens der Staukammer (112) zum Gesamtvolumen aller Durchlässe zwischen 1 und 500, oder zwischen 10 und 200, oder zwischen 30 und 160 liegt, wobei die Grenzwerte eingeschlossen sind.

13. Laserbearbeitungskopf (1000), umfassend:
eine Laservorrichtung zum Bereitstellen eines Laserstrahls (10); und
eine Gaszufuhrvorrichtung zum Erzeugen eines homogenen Gasstroms nach einem der vorausgehenden Ansprüche.

14. Laserbearbeitungskopf (1000) nach Anspruch 13, weiter umfassend ein optisches Element (150), wobei das gemeinsame Volumen (120) am optischen Element (150) angeordnet ist.

15. Laserbearbeitungskopf (1000) nach Anspruch 13 oder 14, wobei das Drosselelement (116, 416, 516) so eingerichtet ist, dass der durch die Durchlässe strömende Gasstrahl im Wesentlichen senkrecht oder in einem Winkel zwischen 60° und 90° auf das optische Element (150) gerichtet ist.

## Claims

1. Gas supply device (100) for a laser processing head for generating a homogeneous gas flow, comprising:
a gas inlet (114);
at least one storage chamber (112) connected to the gas inlet (114) and providing a storage volume;
at least one throttling element (116, 416, 516) containing a plurality of passages;
a common volume (120) for superimposing a laser beam (10) and a gas flow; and
an outlet opening (142) at a first end of the common volume (120) for providing the homogeneous gas flow;
wherein the throttling element (116, 416, 516) connects the storage chamber (112) to the common volume (120),
**characterized in that**
the throttling element (116, 416, 516) and the storage chamber (112) are configured to generate a homogeneous gas flow in the common volume (120),
wherein the passages include a ratio of the passage length to the passage diameter between 2 and 8, and
wherein the limit values are included.

2. Gas supply device (100) according to claim 1, wherein the gas supply device is integrated in or forms part of the laser processing head, or
wherein the gas supply device (100) further comprises at least one fastening means at a second end of the common volume (120) opposite the outlet opening (142) for fastening the gas supply device (100) to the laser processing head.

3. Gas supply device (100) according to claim 1 or 2, wherein the throttling element (116, 416, 516) is arranged such that a gas flow flowing through the passages is directed towards a second end of the common volume (120) opposite to the first end.

4. Gas supply device (100) according to claim 3, wherein the gas supply device (100) includes a central axis connecting the first end and the second end of the common volume (120), and wherein the throttling element (116, 416, 516) is configured such that the gas flow has an angle of 0° to 30° with respect to the central axis: 0°≤α≤30°.

5. Gas supply device (100) according to any one of the preceding claims, wherein the passages include a circular or elongated cross-section.

6. Gas supply device (100) according to any one of the preceding claims, wherein the passages taper from the storage chamber (112) towards the common volume (120) and/or include a conical shape.

7. Gas supply device (100) according to any one of the preceding claims, wherein the throttling element (116, 416, 516) comprises a hole circle or is a hole circle.

8. Gas supply device (100) according to any one of the preceding claims, wherein the passages include a diameter between 0.5 and 2 mm, wherein the limit values are included.

9. Gas supply device (100) according to any one of the preceding claims, wherein the storage chamber (112) is ring-shaped and/or runs around the common volume (120).

10. Gas supply device (100) according to any one of the preceding claims, wherein the gas inlet (114) is the only gas inlet to the storage chamber (112).

11. Gas supply device (100) according to any one of the preceding claims, wherein a number of passages of the throttling element (116, 416, 516) is between 5 and 40 or between 10 and 30 or between 15 and 25, wherein the limit values are included.

12. Gas supply device (100) according to any one of the preceding claims, wherein a ratio of the volume of the storage chamber (112) to the total volume of all passages is between 1 and 500, or between 10 and 200, or between 30 and 160, wherein the limit values are included.

13. Laser processing head (1000), comprising:
a laser device for providing a laser beam (10); and
a gas supply device for generating a homogeneous gas flow according to any one of the preceding claims.

14. Laser processing head (1000) according to claim 13, further comprising an optical element (150), wherein the common volume (120) is located at the optical element (150).

15. Laser processing head (1000) according to claim 13 or 14, wherein the throttling element (116, 416, 516) is configured such that the gas jet flowing through the passages is directed substantially perpendicularly or at an angle between 60° and 90° towards the optical element (150).

## Revendications

1. Dispositif d'alimentation en gaz (100) pour une tête d'usinage au laser, destiné à générer un flux de gaz homogène, comprenant :
une entrée de gaz (114) ;
au moins une chambre d'accumulation (112) reliée à l'entrée de gaz (114) et fournissant un volume d'accumulation ;
au moins un élément d'étranglement (116, 416, 516) comportant une pluralité de passages ;
un volume partagé (120) pour superposer un faisceau laser (10) et un flux de gaz ; et
un orifice d'évacuation (142) à une première extrémité du volume partagé (120) pour fournir le flux de gaz homogène ;
dans lequel l'élément d'étranglement (116, 416, 516) relie la chambre d'accumulation (112) au volume partagé (120),
**caractérisé en ce que**
l'élément d'étranglement (116, 416, 516) et la chambre d'accumulation (112) sont configurés pour générer un flux de gaz homogène dans le volume partagé (120),
dans lequel les passages ont un rapport de longueur de passage sur diamètre de passage entre 2 et 8, et dans lequel les valeurs limites sont incluses.

2. Dispositif d'alimentation en gaz (100) selon la revendication 1, dans lequel le dispositif d'alimentation en gaz est intégré dans la tête d'usinage au laser ou forme une partie de celle-ci, ou
dans lequel le dispositif d'alimentation en gaz (100) comprend en outre au moins un moyen de fixation à une seconde extrémité du volume partagé (120) qui est opposée à l'orifice d'évacuation (142) afin de fixer le dispositif d'alimentation en gaz (100) sur la tête d'usinage au laser.

3. Dispositif d'alimentation en gaz (100) selon la revendication 1 ou 2, dans lequel l'élément d'étranglement (116, 416, 516) est agencé de telle sorte qu'un flux de gaz s'écoulant à travers les passages est dirigé vers une seconde extrémité du volume partagé (120), qui est opposée à la première extrémité.

4. Dispositif d'alimentation en gaz (100) selon la revendication 3, dans lequel le dispositif d'alimentation en gaz (100) comporte un axe central qui relie la première extrémité et la seconde extrémité du volume partagé (120), et dans lequel l'élément d'étranglement (116, 416, 516) est configuré de telle sorte que le flux de gaz a un angle de 0° à 30° par rapport à l'axe central : 0° ≤ α ≤ 30°.

5. Dispositif d'alimentation en gaz (100) selon l'une des revendications précédentes, dans lequel les passages ont une section transversale circulaire ou oblongue.

6. Dispositif d'alimentation en gaz (100) selon l'une des revendications précédentes, dans lequel les passages se rétrécissent à partir de la chambre d'accumulation (112) jusqu'au volume partagé (120) et/ou ont une forme conique.

7. Dispositif d'alimentation en gaz (100) selon l'une des revendications précédentes, dans lequel l'élément d'étranglement (116, 416, 516) comprend un cercle de trous ou est un cercle de trous.

8. Dispositif d'alimentation en gaz (100) selon l'une des revendications précédentes, dans lequel les passages ont un diamètre compris entre 0,5 et 2 mm, dans lequel les valeurs limites sont incluses.

9. Dispositif d'alimentation en gaz (100) selon l'une des revendications précédentes, dans lequel la chambre d'accumulation (112) est formée de façon annulaire et/ou s'étend autour du volume partagé (120).

10. Dispositif d'alimentation en gaz (100) selon l'une des revendications précédentes, dans lequel l'entrée de gaz (114) est la seule entrée de gaz de la chambre d'accumulation (112).

11. Dispositif d'alimentation en gaz (100) selon l'une des revendications précédentes, dans lequel un nombre de passages de l'élément d'étranglement (116, 416, 516) est compris entre 5 et 40 ou entre 10 et 30 ou entre 15 et 25, dans lequel les valeurs limites sont incluses.

12. Dispositif d'alimentation en gaz (100) selon l'une des revendications précédentes, dans lequel un rapport de volume de la chambre d'accumulation (112) sur le volume total de tous les passages est compris entre 1 et 500 ou entre 10 et 200 ou entre 30 et 160, dans lequel les valeurs limites sont incluses.

13. Tête d'usinage au laser (1000), comprenant :
un dispositif à laser pour délivrer un faisceau laser (10); et
un dispositif d'alimentation en gaz pour générer un flux de gaz homogène selon l'une des revendications précédentes.

14. Tête d'usinage au laser (1000) selon la revendication 13, comprenant en outre un élément optique (150), dans lequel le volume partagé (120) est agencé sur l'élément optique (150).

15. Tête d'usinage au laser (1000) selon la revendication 13 ou 14, dans lequel l'élément d'étranglement (116, 416, 516) est configuré de telle sorte que le flux de gaz s'écoulant à travers les passages est sensiblement perpendiculaire ou est dirigé vers l'élément optique (150) à un angle compris entre 60° et 90°.
